# EUROPÄISCHE PATENTSCHRIFT

(11) **EP 0 602 352 B1**
(45) Veröffentlichungstag und Bekanntmachung des Hinweises auf die Patenterteilung: **17.01.1996**
(21) Anmeldenummer: 93117200.1
(22) Anmeldetag: 23.10.1993
(51) Int. Cl.: F25D 25/04, F25D 13/06, B65G 65/00

(54) **Vorrichtung zum Gefrieren von Lebensmitteln**
Device for the freezing of food
Appareil pour la congélation de produits alimentaires

(30) Priorität: 16.12.1992 DE 4242573
(43) Veröffentlichungstag der Anmeldung: 22.06.1994
(73) Patentinhaber: BÄCKEREI OSWALD PILLER, D-85757 Karlsfeld (DE)
(72) Erfinder: Piller, Oswald, D-85757 Karlsfeld (DE)
(74) Vertreter: Haft, von Puttkamer, Berngruber, Czybulka

(56) Entgegenhaltungen:
- EP-A- 0 452 844
- DE-A- 2 510 028
- DE-A- 3 825 687
- GB-A- 2 053 831

## Beschreibung

Die vorliegende Erfindung betrifft eine Vorrichtung zum Gefrierer von Lebensmitteln, insbesondere von Backwaren nach dem Oberbegriff des Anspruchs 1. Eine solche Vorrichtung ist aus der EP-A-452 844 bekannt.

Aufgrund des vorherrschenden Trends, Lebensmittel und insbesondere Kleinbackwaren unmittelbar vor dem Verkauf an den Endverbraucher fertigzustellen, z. B. zu backen, werden Vorrichtungen zum Gefrieren benötigt, wobei sich der Gefriervorgang unmittelbar an die Herstellung des Lebensmittelrohlings anschließt. Der Gefriervorgang soll dabei möglichst wenig Energie benötigen und vollautomatisch ablaufen können.

Herkömmliche Gefrierschränke weisen eine große, meistens eine Schmalseite einnehmende Einlaßtür auf, in die eine Vielzahl von einzeln einschiebbaren Blechen oder anderen Unterlagen mit den auf ihnen verteilten Lebensmitteln manuell eingebracht werden. Durch das Öffnen der Tür dringt warme Luft in das Innere des Gefrierschranks, die nach dem Verschließen auf die notwendige Gefriertemperatur abgesenkt werden muß. Ein derartiger Gefriervorgang ist zeit- und energieaufwendig.

Die oben erwähnte EP-A-452 844 beschreibt eine Vorrichtung zum Gefrieren von Lebensmitteln mit einem kastenförmigen Gehäuse, mit mindestens einem Kälteerzeuger, wobei das Gehäuse an einer Seite mit mindestens einer waagrechten Eingabeöffnung versehen ist und an der gegenüberliegenden Seite mit einer waagrechten, auf gleicher Höhe angeordneten Abgabeöffnung versehen ist. Innerhalb des Gehäuses sind übereinander angeordnete Ablageflächen für zu gefrierende Lebensmittel vorgesehen, die einzeln beschickbar sind. Die Ablageflächen bestehen dabei aus steifen Platten, die durch Hydraulikzylinder angehoben bzw. abgesenkt werden und die zur Aufnahme von Gefäßen dienen, in denen die zu gefrierenden Lebensmittel enthalten sind. Die Platten selber sind hohl und werden von Kaltluft durchströmt, welche an der Oberseite der Platte angeordnete Öffnungen durchsetzt. Erforderlich bei dieser Vorrichtung ist, daß die Luftfeuchtigkeit auf Null abgesenkt wird, da sonst die Gefäße an den Platten festfrieren könnten.

Die DE-OS 28 28 214 bezieht sich auf eine Anordnung zum Einfrieren von Lebensmitteln, mit kettengeförderten Aufzügen im Kühlraum, wobei Paletten, auf denen das Kühlgut angeordnet ist, schrittweise angehoben bzw. abgesenkt werden.

Aus der DE-OS 38 25 687 ist eine Plattengefriermaschine bekannt, bei der fortlaufend ein Druck auf das zu gefrierende Gut ausgeübt wird, das auf Platten angeordnet wird, die ebenfalls in Art eines Aufzugs angehoben und abgesenkt werden, so daß die jeweils zu beschickende Platte auf Höhe des Eingabespaltes zu liegen kommt.

Die DE-PS 27 36 478 bezieht sich auf eine Gefriervorrichtung in Form eines ortsfesten Gehäuses, in dem übereinanderliegend angeordnete bewegte Träger für das zu gefrierende Gut vorgesehen sind, die außerhalb des Gehäuses beschickt werden und dann in den Kühlraum eingeführt werden müssen.

Die DE-PS 27 04 114 beschreibt eine Kühl- und Gefrieranlage mit einem Kühlgehäuse, in dem zwei Vertikalförderer vorgesehen sind zur Aufnahme von horizontal übereinander angeordnete Unterlagen für das zu gefrierende Gut. Der eine Vertikal förderer bewegt sich aufwärts und der andere abwärts, wobei zwischen ihnen ein Überführförderer zum Überführen der Unterlagen von einem zum anderen Förderer vorgesehen sind; die Unterlagen sind in Längsrichtung biegbar und in Querrichtung starr; es ist klar, daß eine derartige Anlage einen erheblichen Raumbedarf aufweist.

Die DE-PS 28 38 170 bezieht sich auf einen Lebensmittelgefrierer, mit einem Stapel von mehreren horizontal im Abstand voneinander angeordneten Gefrierplatten, die auf Höhe der Belade- oder Entladestation anhebbar bzw. absenkbar sind.

Allen diesen bekannten Vorrichtungen ist noch der Nachteil zu eigen, daß sie zeitaufwendig und teilweise nur manuell zu beschicken sind und daß ein erheblicher Energiebedarf für das Gefrieren der Lebensmittel besteht.

Aufgabe der vorliegenden Erfindung ist es, eine Vorrichtung zum Gefrieren von Lebensmitteln und insbesondere von Kleinbackwaren zu schaffen, die vollautomatisch in kurzer Zeit mit den zu gefrierenden Lebensmitteln beschickt werden kann und mit einem Minimum an für die Kalteerzeugung benötigten Energie auskommt,

Ausgehend von einer Vorrichtung der eingangs näher genannten Art wird zur Lösung dieser Aufgabe vorgeschlagen, daß die Ablageflächen aus den oberen Trumen von Endlosbändern bestehen, die sich im wesentlichen von der Eingabeöffnung bis zur Abgabeöffnung erstrecken und deren Förderrichtung von der ersteren zur letzteren verläuft, daß das Gestell eine Vielzahl von sich beidseits der Endlosbänder im wesentlichen senkrecht erstreckender Pfosten aufweist, und daß die der Abgabeöffnung benachbarten Pfosten mit Sensoren versehen sind zur Feststellung der Anwesenheit von Lebensmitteln auf einem vorgegebenen Bereich der Endlosbänder, wobei die Sensoren mit der Steuervorrichtung für die Hubvorrichtung verbunden sind. Einige der Pfosten können dabei mit Laufrollen versehen sein.

Gemäß einem vorteilhaften Ausführungsbeispiel entspricht die Gesamthöhe der übereinander angeordneten Endlosbänder des Gestells der halben Höhe des Innenraums des Gehäuses.

Besonders günstig ist es, wenn die Eingabeöffnung von einem Beschickungsförderband durchsetzt wird, das bis in unmittelbare Nähe des zugehörigen Endlosbandes reicht, wobei die Eingabeöffnung selbst durch einen flexiblen Vorhang abgedeckt sein kann.

Vorteilhafterweise ist die Ausgabeöffnung von einer unter einem Winkel angeordneten Abgaberutsche zur Abfuhr der gefrorenen Lebensmittel durchsetzt, deren in das Gehäuse ragendes Ende bis in unmittelbare Nähe des zugehörigen Endlosbandes reicht, wobei die Abgabeöffnung durch einen flexiblen Vorhang abgedeckt sein kann.

Die ausgestaltete Vorrichtung verfügt über einen schmalen, in etwa der Höhe der zu gefrierenden Lebensmittel entsprechenden Eingabeschlitz, der zudem noch durch einen flexiblen gegebenenfalls streifenförmigen Vorhang aus PVC abgedeckt ist und durch den die zu gefrierenen Lebensmittel auf die Oberflächen der einzelnen anhebbaren bzw. absenkbaren Endlosbänder verteilt werden. Dies bedeutet, daß bei der Beschickung der Vorrichtung die Zufuhr warmer Umgebungsluft in das Innere des Gehäuses auf eine Minimum begrenzt ist; die gegenüberliegende Abgabeöffnung, die von der Abgaberutsche durchsetzt ist, weist ebenfalls nur eine Höhe auf, die der Höhe der gefrorenen Lebensmittel entspricht und ist ebenfalls durch einen flexiblen Vorhang abgedeckt, so daß auch hier der Zutritt warmer Umgebungsluft bzw. das Ausströmen kalter Luft auf das absolute Minimum beschränkt ist.

Ein manuelles Eingreifen ist nicht erforderlich, da nach dem Beschicken eines der Endlosbänder die vorgesehene Steuervorrichtung das nächste Band auf Höhe des die Eingabeöffnung durchsetzenden Förderbandes angehoben bzw. abgesenkt wird, so daß in kürzester Zeit sämtliche Endlosbänder mit zu gefrierenden Lebensmitteln, z.B. Semmelrohlingen oder Brezelrohlingen, belegt sind.

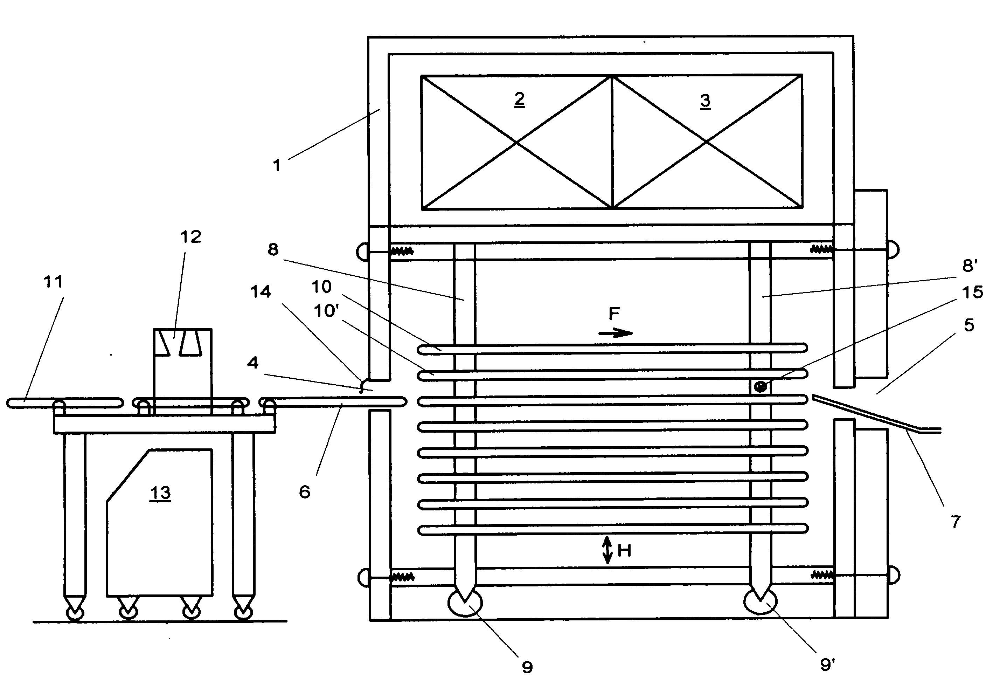

Im folgenden wird die Erfindung anhand der Zeichnung näher erläutert, in der ein vorteilhaftes Ausführungsbeispiel dargestellt ist.

In der einzigen Figur ist mit 1 ein kastenförmiges, z.B. feststehendes Gehäuse bezeichnet, in dem der Gefriervorgang stattfindet. Mit 2 und 3 sind zwei Kälteerzeuger bezeichnet, die z.B. mit jeweils einem Ventilator versehen sein können, um die erzeugte Kaltluft gleichmäßig im Inneren des kastenförmigen Gehäuses zu verteilen. Mit 4 ist eine im wesentlichen waagerechte, an einer der Schmalseiten des kastenförmigen Gehäuses 1 vorgesehene und sich über die gesamte Breite dieser Schmalseite erstreckende Eingabeöffnung bezeichnet, welche von einem Beschickungsförderband 6 zum Einbringen der zu gefrierenden Lebensmittel durchsetzt wird. Die Höhe dieser Eingabeöffnung 4 ist so gewählt, daß die einzubringenden Lebensmittel, z.B. fertiggeschlungene, nicht gebackene Brezeln, gerade die Öffnung 4 durchsetzen können. Zur Anpassung. an andere Lebensmittel ist die Höhe der Eingabeöffnung variabel. Mit 14 ist ein die Öffnung 4 verdeckender, flexibler Vorhang z.B. aus PVC-Streifen bezeichnet.

Auf der gegenüberliegenden Schmalseite des kastenförmigen Gehäuses 1 ist eine Abgabeöffnung 5 vorgesehen, die von einer geneigt angeordneten Übergaberutsche 7 durchsetzt wird zur Abgabe der gefrorenen Lebensmittel. Auch hier ist die Höhe der Öffnung 5 variabel, wobei diese ebenfalls durch einen flexiblen Vorhang abgedeckt sein kann.

Innerhalb des kastenförmigen Gehäuses 1 ist ein Gestell vorgesehen, das durch die beiden senkrechten Tragpfosten 8, 8' angedeutet ist. Das Gestell trägt eine Vielzahl von waagerechten, übereinander und parallel zueinander angeordneten Endlosbändern 10, 10', ..., auf deren Oberseiten die zu gefrierenden Lebensmittel abgelegt werden und die sich im wesentlichen von der Eingabeöffnung zur Abgabeöffnung erstrecken. Die Antriebsgeschwindigkeit der Endlosbänder 10, 10' entspricht der Antriebsgeschwindigkeit des Förderbandes 6, mit dem die Lebensmittel den Endlosbändern zugeführt werden. Ist eines der Endlosbänder voll belegt, was durch Zeitablauf oder durch entsprechende Sensoren festgestellt werden kann, die z.B. an den der Abgabeöffnung benachbarten Pfosten 8' vorgesehen sind, so wird durch eine nicht dargestellte Steuervorrichtung die Gesamtheit der Endlosbänder, wie es durch den Doppelpfeil H angedeutet ist, angehoben bzw. abgesenkt, so daß das nächstfolgende Endlosband ebenfalls über seine gesamte Länge (Transportrichtung F) mit zu gefrierenden Lebensmitteln beschickt werden kann. Die Gesamthöhe aller übereinander angeordneten Endlosbänder 10, 10', ... samt den Zwischenräumen überschreitet dabei nicht die halbe lichte Höhe des Innenraums des kastenförmigen Gehäuses zwischen den Kälteerzeugern 2, 3 und dem Boden.

Mit 9, 9' sind Laufrollen für das Gestell bezeichnet, das sich z.B. zu Desinfektionszwecken damit aus dem Gehäuse 1 fahren läßt. Die Steuervorrichtung zum Anheben bzw. Absenken der Gesamtheit der Endlosbänder kann z.B. aus einem, an dem Pfosten 8, 8' und beidseits der Endlosbänder angeordneten Kettentrieb bestehen, der in Abhängigkeit von Steuersignalen der entsprechenden Sensoren 15 jeweils ein leeres Endlosband auf Höhe des Förderbandes 6 verschiebt, dessen eines Ende sich bis in unmittelbare Nähe eines der Endlosbänder erstreckt.

Nach dem Gefriervorgang werden die gefrorenen Lebensmittel durch erneuten Antrieb, d.h. Längsbewegung in Richtung des Pfeiles F, über die Übergaberutsche 7 und die Abgabeöffnung 5 hindurch einer entsprechenden Verpackung zugeführt.

Die erfindungsgemäße Vorrichtung eignet sich insbesondere zum Gefrieren von geschlungenen, noch nicht gebackenen Brezeln, die z.B. mit einer Vorrichtung gemäß der DE-PS 38 41 395 kontinuierlich hergestellt werden. Diese Brezelrohlinge werden z.B. über ein Transportband 11 einer Behandlungseinrichtung 12, z.B. einer Belaugungsanlage, zugeführt, die oberhalb eines Auffangtanks 13 angeordnet ist. Von dort werden sie auf das Förderband 6 abgegeben, welches sie auf die Endlosbänder 10, 10' innerhalb der erfindungsgemäßen Vorrichtung befördert, wo sie dem Gefriervorgang ausgesetzt werden.

Da es ohne weiteres möglich ist, vollautomatisch etwa 1500 300g-Brezeln pro Stunde herzustellen, ist die erfindungsgemäße Vorrichtung so bemessen, daß bei einer Gefrierzeit von ca. 20 Minuten die Endlosbänder 10, 10' insgesamt etwa 500 Brezeln aufnehmen können. Eine quasikontinuierliche Beschickung der erfindungsgemäßen Vorrichtung zum Gefrieren von Lebensmitteln ist möglich, da die Rohlinge kontinuierlich angeliefert werden und die Hub-bzw. Senkbewegungen der Endlosbänder im Gestell nach Belegung bzw. Leerung nur außerst kurze Zeiten beansprucht. Ferner wird nur ein Minimum an Energie benötigt zur Kälteerzeugung, da aufgrund der Minimalgrößen von Eingabeöffnung und Abgabeöffnung nur sehr wenig warme Luft in die Vorrichtung eindringt, bzw. kalte Luft aus dieser austritt.

## Patentansprüche

1. Vorrichtung zum Gefrieren von Lebensmitteln, insbesondere Backwaren, bestehend aus einem kastenförmigen Gehäuse (1) mit mindestens einem Kälteerzeuger (2, 3), wobei das Gehäuse an einer Seite mit mindestens einer waagrechten, sich im wesentlichen über die gesamte Breite erstreckenden Eingabeöffnung (4) versehen ist und an der gegenüberliegenden Seite mit einer waagrechten, sich im wesentlichen über die gesamte Breite erstreckenden und auf gleicher Höhe wie die Eingabeöffnung angeordneten Abgabeöffnung (5) versehen ist und aus einem im Gehäuse angeordneten Gestell bestehend, das eine Vielzahl übereinander angeordneter Ablageflächen für die zu gefrierenden Lebensmittel aufweist, die nacheinander auf die Höhe der Eingabeöffnung (4) mittels einer mit einer Steuervorrichtung verbundenen Hubvorrichtung anhebbar bzw. absenkbar sind, dadurch gekennzeichnet, daß die Ablageflächen aus den oberen Trumen von Endlosbändern (10, 10') bestehen, die sich im wesentlichen von der Eingabeöffnung (4) bis zur Abgabeöffnung (5) erstrecken, wobei deren Förderrichtung (F) von der ersteren zur letzteren verläuft, daß das Gestell eine Vielzahl von sich beidseits der Endlosbänder (10, 10') im wesentlichen senkrecht erstreckender Pfosten (8, 8') aufweist, und daß die der Abgabeöffnung (5) benachbarten Pfosten (8') mit Sensoren (15) versehen sind zur Feststellung der Anwesenheit von Lebensmitteln auf einem vorgegebenen Bereich der Endlosbänder (10, 10'), wobei die Sensoren (15) mit der Steuervorrichtung für die Hubvorrichtung verbunden sind.

2. Vorrichtung nach Anspruch 1, dadurch gekennzeichnet, daß wenigstens vier Pfosten (8, 8') mit Laufrollen (9, 9') versehen sind.

3. Vorrichtung nach einem der vorhergehenden Ansprüche, dadurch gekennzeichnet, daß die Gesamthöhe der übereinander angeordneten Endlosbänder (10, 10') der halben Höhe des Innenraums des Gehäuses (1) entspricht.

4. Vorrichtung nach einem der vorhergehenden Ansprüche, dadurch gekennzeichnet, daß die Eingabeöffnung (4) von einem Beschickungsförderband (6) durchsetzt wird, das bis in unmittelbare Nähe des zugehörigen Endlosbandes reicht, und daß die Eingabeöffnung (4) durch einen flexiblen Vorhang (14) abgedeckt ist.

5. Vorrichtung nach einem der vorhergehenden Ansprüche, dadurch gekennzeichnet, daß die Abgabeöffnung (5) von einer unter einem Winkel angeordneten Abgaberutsche (7) zur Abfuhr der gefrorenen Lebensmittel durchsetzt ist, deren in das Gehäuse (1) ragendes Ende bis in unmittelbare Nähe des zugehörigen Endlosbandes reicht und daß die Abgabeöffnung (5) durch einen flexiblen Vorhang abgedeckt ist.

## Claims

1. Device for the freezing of food, particularly bread and pastry products, consisting of a box-shaped casing (1) having at least one cooling device (2, 3), said casing being provided at one side with at least one horizontal input opening (4) extending substantially across the entire width and being provided at its opposite side with a horizontal output opening (5) extending substantially across the entire width and disposed at the same height as said input opening, and consisting of a frame disposed in said casing comprising a plurality of rest surfaces disposed on top of each other for said food to be frozen and which can be successively lifted and lowered, respectively, to the level of said input opening (4) by a lifting device connected to a control device, characterized in that said rest surfaces consist of the upper portions of endless belts (10, 10') extending substantially from said input opening (4) to said output opening (5), the feeding direction (F) thereof being from the former one to the latter one of said openings, that said frame comprises a plurality of posts (8, 8') extending in a direction substantially perpendicular to said endless belts (10, 10') on both sides thereof, and that said posts (8, 8') adjacent to said output opening (5) are provided with sensors (15) for detecting the presence of food products in a predetermined region of said endless belts (10, 10'), said sensors (15) being connected to said control device for said lifting device.

2. Device according to claim 1, characterized in that at least four posts (8, 8') are provided with rollers (9, 9').

3. Device according to any one of the previous claims, characterized in that the overall height of the endless belts (10, 10') disposed on top of each other corresponds to half the height of the inner space of said casing (1).

4. Device according to any one of the previous claims, characterized in that said input opening (4) is penetrated by a feeding conveyor (6) extending to the very proximity of the corresponding endless belt and that said input opening (4) is covered by a flexible curtain (14).

5. Device according to any one of the previous claims, characterized in that said output opening (5) is penetrated by an angularly disposed delivery chute (7) for discharging said frozen food, wherein the end of said chute which extends into said casing (1) extends to the very proximity of the corresponding endless belt, and that said output opening (5) is covered by a flexible curtain.

## Revendications

1. Appareil pour la congélation de produits alimentaires, en particulier pour des produits de boulangerie et de pâtisserie, qui consiste en un carter sous forme de boîte (1) ayant au moins un dispositif de refroidissement (2, 3), ledit carter étant pourvu, d'un côté, d'au moins une ouverture d'entrée (4) horizontale s'étendant sensiblement sur toute la largeur et étant pourvu, du côté opposé, d'une ouverture de sortie (5) horizontale s'étendant sensiblement sur toute la largeur et disposée au même niveau que ladite ouverture d'entrée, et qui consiste en un cadre comprenant une pluralité de surfaces de repos disposées l'une sur l'autre pour les produits alimentaires à être congélés, lesdites surfaces de repos étant susceptibles d'être levées et abaissées, respectivement, par un dispositif de levage relié à un dispositif de commande, caractérisé en ce que lesdites surfaces de repos consistent en des parties supérieures de courroies sans fin (10, 10') s'étendant sensiblement de ladite ouverture d'entrée (4) à ladite ouverture de sortie (5), dont la direction d'amenée (F) s'étend de la première à la dernière de celles-ci, en ce que ledit cadre comprend une pluralité de montants (8, 8') s'étendant sensiblement dans une direction orthogonale et des deux côtés de ces derniers, et en ce que lesdits montants (8') adjacents à ladite ouverture de sortie (5) sont pourvus de capteurs (15) pour détecter la présence de produits alimentaires sur une région prédéterminée desdites courroies sans fin (10, 10'), lesdits capteurs (15) étant reliés au dispositif de commande pour ledit dispositif de levage.

2. Dispositif selon la revendication 1, caractérisé en ce qu' au moins quatre montants (8, 8') sont pourvus de galets de roulement (9, 9').

3. Dispositif selon l'une quelconque des revendications précédentes, caractérisé en ce que la hauteur totale des courroies sans fin (10, 10') disposées les unes sur les autres correspond à la moitié de la hauteur de l'espace intérieur dudit carter (1).

4. Dispositif selon l'une quelconque des revendications précédentes, caractérisé en ce que ladite ouverture d'entrée (4) est pénétrée par une courroie d'alimentation (6) s'étendant jusqu'à proximité de ladite courroie sans fin correspondante, et en ce que ladite ouverture d'entrée (4) est couverte par un rideau (14) flexible.

5. Dispositif selon l'une quelconque des revendications précédentes, caractérisé en ce que ladite ouverture de sortie (5) est pénétrée par une goulotte de déversement (7) disposée selon un angle pour la décharge des produits alimentaires congélés dont l'extrémité s'étend dans ledit carter (1) s'étendant jusqu'à proximité de ladite courroie sans fin correspondante, et en ce que ladite ouverture de sortie (5) est couverte par un rideau flexible.
